**Europäisches Patentamt**

**European Patent Office**

**Office européen des brevets**

(19)

(11) Veröffentlichungsnummer : **0 383 199 B1**

## (12) EUROPÄISCHE PATENTSCHRIFT

(45) Veröffentlichungstag der Patentschrift :
04.12.91 Patentblatt 91/49

(51) Int. Cl.$^5$ : **B29C 67/12**

(21) Anmeldenummer : **90102535.3**

(22) Anmeldetag : **09.02.90**

(54) **Faserverbundwerkstoffe.**

(30) Priorität : 17.02.89 DE 3904813

(43) Veröffentlichungstag der Anmeldung :
22.08.90 Patentblatt 90/34

(45) Bekanntmachung des Hinweises auf die
Patenterteilung :
04.12.91 Patentblatt 91/49

(84) Benannte Vertragsstaaten :
AT CH DE FR GB IT LI NL

(56) Entgegenhaltungen :
US-A- 3 898 113
US-A- 4 025 256
US-A- 4 743 187

(73) Patentinhaber : **BASF Aktiengesellschaft**
**Carl-Bosch-Strasse 38**
**W-6700 Ludwigshafen (DE)**

(72) Erfinder : **Dittmar, Harri**
**Hauptstrasse 28**
**W-6719 Battenberg (DE)**
Erfinder : **Wahl, Ludwig**
**Edith-Stein-Strasse 14**
**W-6707 Schifferstadt (DE)**
Erfinder : **Greening, Giorgio, Dr.**
**Taubenweg 2**
**W-6101 Rossdorf (DE)**
Erfinder : **Heym, Manfred, Dr.**
**Bachweg 6**
**W-6719 Weisenheim (DE)**

EP 0 383 199 B1

**Beschreibung**

Die Erfindung betrifft ein Verfahren zur Herstellung von Faserverbundwerkstoffen aus einer Thermoplastmatrix und unidirektionalen, parallelen Verstärkungsfasern.

Faserverbundwerkstoffe auf Basis von thermoplastischen Kunststoffen finden in zunehmendem Maße Anwendung im Automobilbau. Es war daher erforderlich, kostengünstige, mit hohen Durchsätzen arbeitende Verfahren zur Herstellung solcher Verbundwerkstoffe zu entwickeln.

In der DE-C 2948235 ist ein Verfahren zur Herstellung einer mit Glasfasern verstärkten thermoplastischen Platte beschrieben. Dabei werden in einer Doppelbandpresse genadelte Fasermatten und ein geschmolzener Thermoplast bei einem Druck zwischen 0,1 und 20 bar miteinander verpreßt und zu einer faserverstärkten Platte verfestigt. Der verhältnismäßig niedrige Druck reicht aus, um die lockeren Glasmatten vollständig und luftblasenfrei zu tränken. Da die Fasern in den Glasmatten ungerichtet sind, weisen die erhaltenen Verbundwerkstoffe in allen Richtungen der Plattenebene gleiche, aber verhältnismäßig niedrige Festigkeits- und Steifigkeitswerte auf.

Verbundwerkstoffe aus Thermoplasten und unidirektionalen Verstärkungsfasern sind in GB-A 1485586 beschrieben. Sie werden hergestellt durch diskontinuierliches Verpressen von Lagen aus Thermoplastfolien und Lagen aus parallel angeordneten Faserbündeln bei Temperaturen oberhalb der Erweichungstemperatur des Thermoplasten und bei Drücken von etwa 70 bar. Es hat sich gezeigt, daß Preßzeiten von einer Stunde und mehr erforderlich sind, um ein vollständiges Tränken der Faserlagen, d.h. ein Benetzen der Einzelfilamente, aus denen die Faserbündel bestehen, zu bewirken.

In der EP-C 56703 ist ein kontinuierliches Verfahren zur Herstellung eines Verbundwerkstoffes aus einem thermoplastischen Polymer und parallel ausgerichteten, zu Rovings vereinigten Verstärkungsfasern beschrieben.

Die Rovings werden dabei nach dem Pultrusionsverfahren durch geschmolzenes thermoplastisches Polymer gezogen. Um eine vollständige Imprägnierung und Benetzung der Einzelfilamente zu erreichen, müssen die Rovings mechanisch geöffnet werden, indem man sie unter Spannung über Spreizeroberflächen zieht und die Thermoplastschmelze durch Walken zwischen die Einzelfilamente drückt. Dies hat zur Folge, daß nur verhältnismäßig niedrige Durchsätze erzielt werden können, und daß Filamentbrüche auftreten. Außerdem verbleiben Lufteinschlüsse im Produkt. Wird die Viskosität des Thermoplasten durch Zusatz von Lösungsmitteln oder Weichmachern reduziert, dann enthält das Produkt Reste dieser Zusätze.

Der Erfindung lag daher die Aufgabe zugrunde, ein kontinuierliches Verfahren zur Herstellung von Faserverbundwerkstoffen zu entwickeln, bei dem parallel angeordnete, mechanisch nicht miteinander verbundene Faserbündel schnell und vollständig mit einer Schmelze eines thermoplastischen Kunststoffes getränkt werden können. Die dabei hergestellten Faserverbundwerkstoffe sollen frei von Luftblasen sein und eine hohe Festigkeit und Steifigkeit in der Vorzugsrichtung der Verstärkungsfasern, sowie eine hohe Zähigkeit aufweisen.

Erfindungsgemäß wird diese Aufgabe dadurch gelöst, daß man kontinuierlich parallele, mechanisch nicht miteinander verbundene Faserbündel und einen thermoplastischen Kunststoff in eine Doppelbandpresse einführt, unter einem spezifischen Druck von mindestens 10 bar bei einer Temperatur von mehr als 10°C über den Schmelzpunkt des Thermoplasten 20 sec bis 20 min lang verpreßt und den Verbund unter Druck abkühlt.

In einer bevorzugten Ausführungsform arbeitet man in einer Doppelbandpresse, die allseits abgedichtet ist. Eine derartige Vorrichtung ist in der EP-A 212232 beschrieben. Sie wird dort zur Herstellung von thermoplastischen Bahnen beschrieben, die gegebenenfalls mit Textilgeweben, Glasfasergeweben, Metallgeweben oder Faservliesen verstärkt sein können. Zur vollständigen Tränkung dieser Gewebe oder Vliese reichen verhältnismäßig geringe Drücke aus. Die Druckschrift liefert keinen Hinweis darauf, daß bei Anwendung von Drücken oberhalb von 10 bar auch parallele Faserbündel vollständig getränkt werden können. Bei den in EP-A 212232 verwendeten Geweben sind die parallelen Fasern mechanisch miteinander verbunden. Bei Einsatz nicht verbundener Faserbündel und Anwendung hoher Drücke mußte damit gerechnet werden, daß die Faserbündel disloziert werden und damit die Parallelität aufgehoben wird, was ein niedrigeres mechanisches Eigenschaftsniveau zur Folge haben würde.

Mit dem erfindungsgemäßen Verfahren gelingt es, die Faserbündel vollständig und gleichmäßig zu imprägnieren, d.h. die Thermoplastschmelze dringt in die Faserbündel ein und benetzt und umhüllt die Einzelfilamente, und zwar auch bei verhältnismäßig dicken Lagen (Tapes) von 0,5 mm und mehr.

Auf diese Weise lassen sich hohe Fasergehalte von mehr als 50 Vol.% erreichen, was sonst kontinuierlich nur durch Imprägnieren mit Thermoplastlösungen möglich ist. Die erfindungsgemäß hergestellten Faserverbundwerkstoffe haben vorzugsweise einen Fasergehalt von 30 bis 70, insbesondere von 40 bis 65 Vol.%.

Die erhaltenen Verbundstoffe sind frei von Fehlstellen und Lufteinschlüssen. Dadurch kann man bei der anschließenden Verarbeitung des Halbzeugs durch Umformen und Verpressen auf die Anwendung hoher Drücke verzichten, was notwendig wäre, wenn noch Lufteinschlüsse ausgepreßt werden müßten.

Das erfindungsgemäße Verfahren wird auf einer Doppelbandpresse, wie sie z.B. in der EP-A 212232 beschrieben ist, durchgeführt. Diese ist vorzugsweise allseits abgeschlossen, so daß keine Schmelze seitlich austreten kann. Dies kann durch geeignete Abdicht-Maßnahmen bewerkstelligt werden.

Die Verstärkungsfasern können aus den üblichen Materialien bestehen, z.B. aus Glas, Kohlenstoff oder aromatischen Polyamiden. Sie werden der Doppelbandpresse als parallele Faserbündel zugeführt, wobei sie als Rovings vereinigt sein oder lose nebeneinander vorliegen können. Sie sind mechanisch nicht miteinander verbunden, liegen also nicht in Form eines Gewebes oder Gewirkes vor. Das Flächengewicht der Fasern beträgt vorzugsweise 100 bis 800 g · m⁻², insbesondere 200 bis 600 g · m⁻². Die Faserbänder können eine Breite von 10 bis 150 cm, vorzugsweise von 30 bis 100 cm haben. Die Faserbündel können als Rovings von einem üblichen Spulengatter abgezogen werden ; man kann aber vorteilhaft mit einem Zettelbaum arbeiten, der direkt aus Spinnfäden konfektioniert wird.

Der thermoplastische Kunststoff kann in verschiedener Form der Doppelbandpresse zugeführt werden. Bevorzugt wird er als extrudierte Schmelze zugeführt ; man kann aber auch Folien zuführen, die dann im Einzugsbereich der Presse aufgeschmolzen werden. Auch Thermoplastfasern können verwendet werden, wobei sie zweckmäßigerweise mit den verstärkungsfasern vorgemischt werden (Hybridgarn). Schließlich kann man auch Thermoplastpulver auf die Faserbündel aufstreuen oder aus wässriger Dispersion aufbringen, wobei dann vor der Einführung in die Doppelbandpresse das Wasser verdampft werden muß.

In der Doppelbandpresse werden die Faserbündel mit der Thermoplastschmelze imprägniert. Dies geschieht bei einem Druck von mindestens 10 bar, vorzugsweise zwischen 20 und 100 bar. Die Temperatur soll so hoch sein, daß der Thermoplast als Schmelze vorliegt, d.h. sie liegt mehr als 10, vorzugsweise 20 bis 120°C über dem Schmelzpunkt des Thermoplasten. Die Verweilzeit auf der Doppelbandpresse beträgt 20 sec bis 20 min, vorzugsweise 40 sec bis 4 min. Die Doppelbandpresse weist eine Kühlzone auf, in welcher der Verbund auf Temperaturen unterhalb des Schmelzpunktes abgekühlt und dadurch verfestigt wird.

Die erfindungsgemäßen Verbundwerkstoffe eignen sich als Halbzeug, aus dem durch Umformen und Verpressen Bauteile hergestellt werden können, die in verschiedenen Bereichen zum Einsatz kommen können, wie z.B. Automobil, Sportartikel, Möbel, etc.

Beispiel

Es wird ein Zettelbaum mit Glasfasern mit einem Flächengewicht von 400 g/m² auf einer gebremsten Abrollstation vor der Doppelbandpresse angeordnet. Ferner werden auf zwei weiteren gebremsten Abrollstationen Folien aus Polypropylen aufgesteckt. Die Folien haben eine Dicke von 60 μm und bestehen aus einem isotaktischen Polypropylen mit Schmelzindex 40. Die vom Zettelbaum abgezogene Faserschar wird mit Hilfe eines kurz vor dem Einlauf in die Doppelbandpresse angebrachten Fadenkammes in paralleler Anordnung zwischen den beiden Thermoplastfolien in die Doppelbandpresse eingebracht. Bei einem Druck von 50 bar, einer Temperatur von 240°C und einer Geschwindigkeit von 1 m/min werden die unidirektionalen Glasfasern in der Heizzone vollständig mit Polypropylen getränkt, in der nachgeschalteten Kühlzone unter Druck gekühlt und in der erstarrenden Matrix fixiert. Damit erhält man ein qualitativ hochwertiges, unidirektionales Tape mit einem Faservolumenanteil von 50% und einer Dicke von ca. 0,3 mm. Bei einer Produktionsbreite von 1 m ergibt dies einen Durchsatz von 32 kg/h, was die Wirtschaftlichkeit des Herstellungsverfahrens verdeutlicht.

## Patentansprüche

1. Verfahren zur Herstellung von Faserverbundwerkstoffen aus einer Thermoplastmatrix und unidirektionalen Verstärkungsfasern durch Imprägnieren der Fasern mit Thermoplastschmelze, dadurch gekennzeichnet, daß man kontinuierlich parallele, mechanisch nicht miteinander verbundene Faserbündel und einen thermoplastischen Kunststoff in eine Doppelbandpresse einführt, unter einem spezifischen Druck von mindestens 10 bar bei einer Temperatur von mehr als 10°C über dem Schmelzpunkt des Thermoplasten 20 sec bis 20 min lang verpreßt und den Verbund unter Druck abkühlt.

2. Verfahren nach Anspruch 1, dadurch gekennzeichnet, daß man den thermoplastischen Kunststoff in die Doppelbandpresse als Schmelze einführt.

3. Verfahren nach Anspruch 1, dadurch gekennzeichnet, daß man den thermoplastischen Kunststoff in die Doppelbandpresse als Folie einführt.

4. Verfahren nach Anspruch 1, dadurch gekennzeichnet, daß man den thermoplastischen Kunststoff in die Doppelbandpresse als Faser einführt, vorzugsweise als Hybridgarn mit den Verstärkungsfasern.

5. Verfahren nach Anspruch 1, dadurch gekennzeichnet, daß man den thermoplastischen Kunststoff in die Doppelbandpresse als Pulver einführt, das auf die Verstärkungsfasern aufgestreut oder aus wässriger Dispersion aufgebracht wurde.

6. Verfahren nach Anspruch 1, dadurch gekennzeichnet, daß es auf einer allseits abgeschlossenen Doppelbandpresse durchgeführt wird.

7. Verwendung der nach Anspruch 1 hergestellten Faserverbundwerkstoffe als Halbzeug zur Herstellung von Automobilteilen durch Pressen.

## Claims

1. A process for producing a fiber composite from a thermoplastics matrix and unidirectional reinforcing fibers by impregnating the fibers with a thermoplastics melt, which comprises continuously introducing parallel, mechanically unconnected fiber bundles and a thermoplastic into a double belt press, pressing under a specific pressure of not less than 10 bar at more than 10°C above the melting point of the thermoplastic for a period of from 20 seconds to 20 minutes, and cooling under pressure.

2. A process as claimed in claim 1, wherein the thermoplastic is introduced into the double belt press as a melt.

3. A process as claimed in claim 1, wherein the thermoplastic is introduced into the double belt press as a film.

4. A process as claimed in claim 1, wherein the thermoplastic is introduced into the double belt press in fiber form, preferably in the form of a hybrid yarn with the reinforcing fibers.

5. A process as claimed in claim 1, wherein the thermoplastic is introduced into the double belt press as a powder applied to the reinforcing fibers by sprinkling or from an aqueous dispersion.

6. A process as claimed in claim 1, which is carried out on a double belt press sealed off on all sides.

7. Use of a fiber composite prepared as claimed in claim 1 as a semi-finished product for producing auto parts by pressing.

## Revendications

1. Procédé pour la fabrication de matériaux composites fibreux à partir d'une gangue de résine thermoplastique et de fibres renforçantes unidirectionnelles par imprégnation des fibres par la résine thermoplastique fondue, caractérisé en ce que l'on envoie une mèche de fibres continues et parallèles, non liées mécaniquement entre elles, et une résine synthétique thermoplastique, dans une presse à double bande, on comprime sous une pression spécifique d'au moins 10 bar, à une température dépassant 10 degrés C au-dessus du point de fusion de la résine thermoplastique, pendant une durée de 20 secondes à 20 minutes et on refroidit la matière composite sous pression.

2. Procédé selon la revendication 1, caractérisé en ce que l'on envoie la résine synthétique thermoplastique dans la presse à double bande à l'état fondu.

3. Procédé selon la revendication 1, caractérisé en ce que l'on introduit la résine thermoplastique dans la presse à double bande à l'état de feuille.

4. Procédé selon la revendication 1, caractérisé en ce que l'on introduit la résine thermoplastique dans la presse à double bande à l'état de fibres, de préférence à l'état de filé hybride, avec les fibres renforçantes.

5. Procédé selon la revendication 1, caractérisé en ce que l'on introduit la résine synthétique thermoplastique dans la presse à double bande à l'état de poudre, qui a été appliquée sur les fibres renforçantes par saupoudrage ou à l'état de dispersion aqueuse.

6. Procédé selon la revendication 1, caractérisé en ce que l'on opère sur une presse à double bande fermée de tous côtés.

7. Utilisation des matériaux composites fibreux fabriqués selon la revendication 1 en tant que produits semi-finis pour la fabrication de pièces d'automobiles par compression.